# EUROPEAN PATENT APPLICATION

(11) **EP 1 739 856 A1**
(43) Date of publication of application: **03.01.2007**
(21) Application number: 05254005.1
(22) Date of filing: 28.06.2005
(51) Int. Cl.: H04B 7/10

(54) **Wireless signal transmitter**

(71) Applicant: Jetfly Technology Limited, Kowloon, Hong Kong (CN)
(72) Inventor: Chan, Shu Nam, 5/F Wong Tze Building, Kowloon Hong Kong (CN); Yeung, Man , 5/F Wong Tze Building, Kowloon Hong Kong (CN)
(74) Representative: Howe, Steven

(57) **Abstract**

A wireless signal transmitter is disclosed as including a sensor for detecting signals signifying heart beat of an individual, rotation of a wheel of a bicycle or rotation of a pedal of a bicycle, and two antennae for wirelessly transmitting the signals detected by the sensor, in which the two antennae are non-parallel to each other. A method of transmitting signals wirelessly is also disclosed as including steps of (a) providing a sensor for detecting signals signifying heart beat of an individual, rotation of a wheel of a bicycle or rotation of a pedal of a bicycle; (b) providing two antennae for wirelessly transmitting the signals detected by the sensor; and (c) transmitting the signals wirelessly *via* the two antennae; in which the two antennae are non-parallel to each other. A heart beat rate monitoring device, a speed monitoring device for a bicycle incorporating such a wireless signal transmitter, and a pedaling rate monitoring device for a bicycle incorporating such a wireless signal transmitter are also disclosed.

## Description

This invention relates to a wireless signal transmitter, in particular, such a transmitter adapted for transmitting signals relating to heart beat rate of an individual, the speed of a vehicle, e.g. bicycle, or the speed of rotation of a pedal of a bicycle.

### Background of the Invention

During exercise, the heart beat rate may be monitored to prevent excessive training, to improve performance, etc. There are various devices for measuring and monitoring the heart beat rate of an individual non-invasively. A possible monitoring device may include a signal transmitting unit in the form of a chest belt and a signal receiving unit for receiving the signals from the signal transmitting unit, for subsequent output. The chest belt may be worn by a user at around the centre of the chest, with sensors (e.g. two electrodes) for detecting signals generated by the heart. Such signals are then transmitted wirelessly, *via* an antenna in electromagnetic wave, to the receiving unit, for subsequent output, e.g. visually by a liquid crystal display (LCD) or audibly by an alarm. The receiving unit is usually wrist-watch like, thus adapted to be worn by the user.

A shortcoming associated with such conventional devices is that as electromagnetic wave is attenuated by the atmosphere and other factors, whatever is the transmission power, the received signals get weaker the longer the distance of the receiving unit is from the transmitting unit. Beyond a certain distance, the signals received by the receiving unit are so weak that they resemble more like background noise. In addition, the quality of signals received will further reduce if the transmitting antenna is generally perpendicular to the receiving antenna. Thus, some signals may be missed by the receiving unit, thereby adversely affecting the performance of the device.

It is thus an object of the present invention to provide a wireless signal transmitter, a method of wirelessly transmitting signals, a heart beat rate monitoring device incorporating such a transmitter, a speed monitoring device incorporating such a transmitter, and a pedaling rate monitoring device incorporating such a transmitter, in which the aforesaid shortcomings are mitigated, or at least to provide useful alternatives to the public and the trade.

### Summary of the Invention

According to a first aspect of the present invention, there is provided a wireless signal transmitter including at least one sensor adapted to detect signals signifying the occurrence of an event; and at least two antennae adapted to wirelessly transmit said signals detected by said sensor; wherein said at least two antennae are non-parallel to each other.

According to a second aspect of the present invention, there is provided a method of transmitting signals wirelessly, including steps of (a) providing at least one sensor adapted to detect signals signifying the occurrence of an event; (b) providing at least two antennae adapted to wirelessly transmit said signals detected by said sensor; and (c) transmitting said signals wirelessly *via* said at least two antennae; wherein said at least two antennae are non-parallel to each other.

According to a third aspect of the present invention, there is provided a heart beat rate monitoring device including at least one wireless signal transmitter and at least one wireless signal receiver adapted to receive signals transmitted by said transmitter; wherein said at least one transmitter includes at least one sensor adapted to detect heart beat signals of an individual and at least two antennae adapted to wirelessly transmit said signals detected by said sensor; wherein said at least two antennae are non-parallel to each other.

According to a fourth aspect of the present invention, there is provided a speed monitoring device for a bicycle including at least one wireless signal transmitter and at least one wireless signal receiver adapted to receive signals transmitted by said transmitter; wherein said at least one transmitter includes at least one sensor adapted to detect signals signifying rotation of a wheel of a bicycle and at least two antennae adapted to wirelessly transmit said signals detected by said sensor; wherein said at least two antennae are non-parallel to each other.

According to a fifth aspect of the present invention, there is provided a pedaling rate monitoring device for a bicycle including at least one wireless signal transmitter and at least one wireless signal receiver adapted to receive signals transmitted by said transmitter; wherein said at least one transmitter includes at least one sensor adapted to detect signals signifying rotation of a pedal of a bicycle and at least two antennae adapted to wirelessly transmit said signals detected by said sensor; wherein said at least two antennae are non-parallel to each other.

### Brief Description of the Drawings

Preferred embodiments of the present invention will now be described, by way of examples only, with reference to the accompanying drawings, in which:
Figure 1A shows a block diagram of a conventional circuit of a wireless signal transmitting unit of a chest belt, for analog transmission;
Figure 1B illustrates the heart beat signals, at a heart beat rate of 120 beats per minute (bpm), after being amplified by the circuit shown in Figure 1A;
Figure 1C shows the heart beat signals shown in Figure 1B after modulation, for analog transmission;
Figure 2A shows a block diagram of a conventional circuit of a wireless signal transmitting unit of a chest belt, for digital transmission;
Figure 2B illustrates the heart beat signals after being coded by a micro-controller unit (MCU) in the circuit shown in Figure 2A;
Figure 2C illustrates the heart beat signals shown in Figure 2B(b) after modulation, for digital transmission;
Figure 3 shows a block diagram of a circuit of a wireless signal receiving unit;
Figures 4A to 4D show the effect of different relative orientation of a transmitting antenna and a receiving antenna;
Figure 5A shows a block diagram of a circuit of a wireless signal transmitting unit according to a first embodiment of the present invention, suitable for analog transmission of signals;
Figure 5B shows a block diagram of a circuit of a wireless signal transmitting unit according to a second embodiment of the present invention, suitable for digital transmission of signals;
Figure 6 shows a schematic diagram of a chest belt incorporating a wireless signal transmitting unit according to the present invention;
Figure 7 shows a wireless signal receiving unit suitable for use in association with a wireless signal transmitting unit according to the present invention;
Figures 8A shows a wireless signal receiving unit used as part of a speed monitoring device for a bicycle, according to the present invention;
Figure 8B shows the installation of a magnet of a wireless signal transmitting unit on a spoke of a bicycle, as part of a speed monitoring device for a bicycle;
Figure 8C shows part of a wireless signal transmitting unit of a speed monitoring device for a bicycle according to the present invention installed on a front fork end of a bicycle;
Figure 8D shows a wireless signal transmitting unit as installed on a bicycle, as part of a speed monitoring device for a bicycle according to the present invention;
Figure 9A shows a bicycle installed with a pedaling rate monitoring device including a wireless signal transmitting device according to the present invention; and
Figure 9B is an enlarged view of part of the bicycle shown in Figure 9A.

### Detailed Description of the Preferred Embodiments

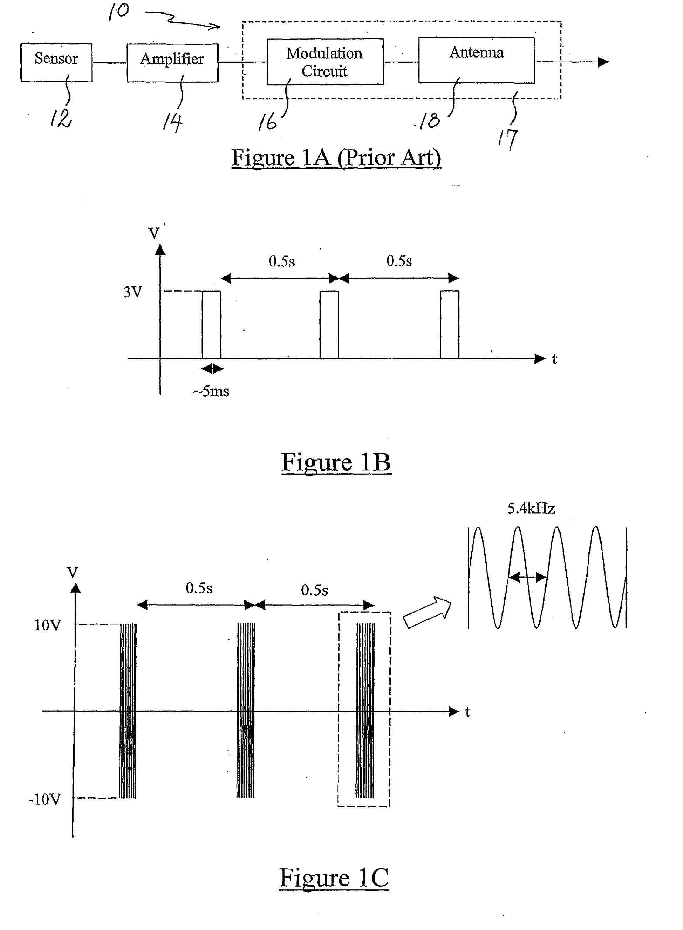

Figure 1A shows a block diagram of a conventional circuit of a wireless signal transmitting unit, generally designated as 10, of a chest belt, using a single antenna for analog transmission. A sensor 12, e.g. with two electrodes, of the chest belt picks up heart beat signals. The signals are then passed to an amplifier 14 for amplification. The amplified signals, as shown in Figure 1B, are then modulated by a modulation circuit 16 of a transmitting circuit 17 to 5.4 kHz and around ±10V, as shown in Figure 1C, for subsequent wireless analog transmission to the open space *via* an antenna 18.

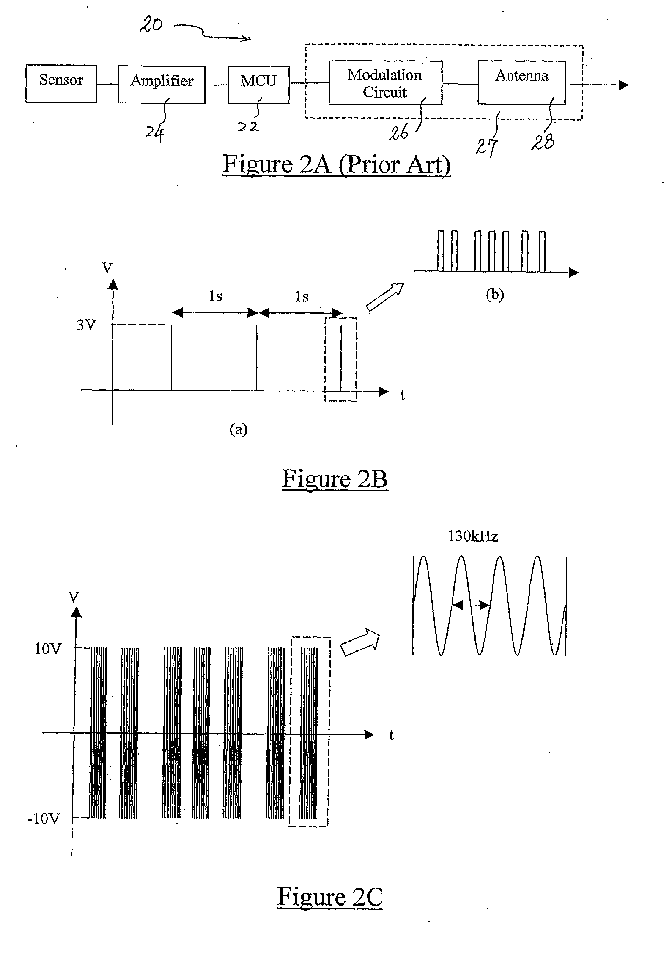

Figure 2A shows a block diagram of a conventional circuit of a wireless signal transmitting unit, generally designated as 20, using a single antenna for digital transmission. It can be seen that this circuit is similar to that shown in Figure 1A, except with the inclusion of a micro-controller unit (MCU) 22 between an amplifier 24 and a modulation circuit 26 of a transmitting circuit 27. The MCU 22 is used for coding the signals after being amplified by the amplifier 24. The coded signals (as shown in Figure 2B(b)) are then modulated to 130 kHz and around ±10V (as shown in Figure 2C) for subsequent wireless digital transmission *via* an antenna 28.

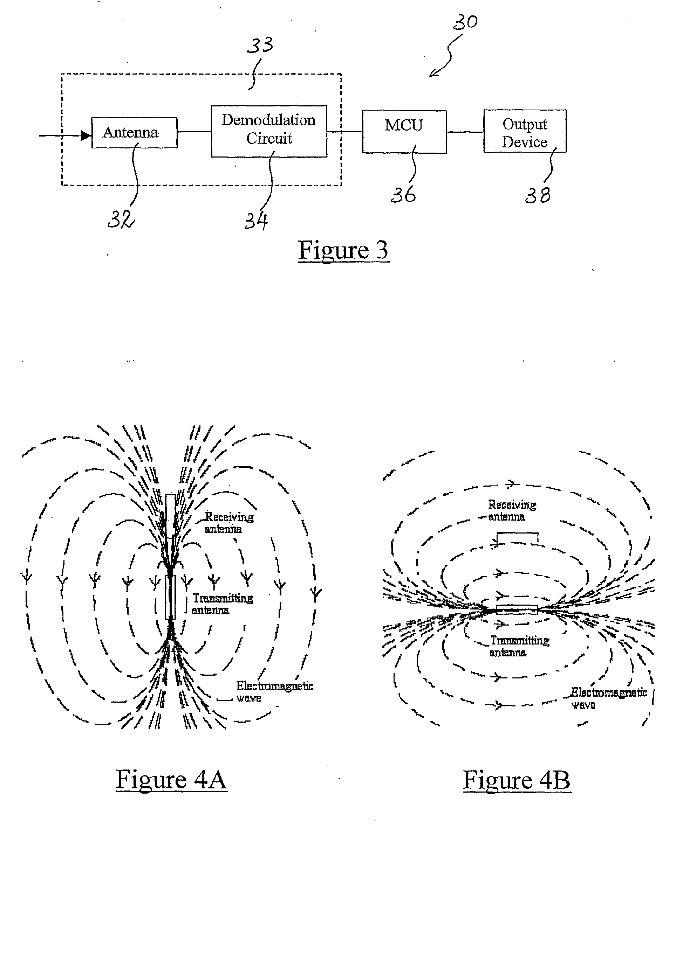

The electromagnetic wave carrying the signals transmitted wirelessly by the antenna 18 or 28 is then received by a wireless signal receiving unit 30, a block diagram of a typical circuit of which is shown in Figure 3. The receiving unit 30 includes an antenna 32, forming part of a receiving circuit 33, for reception of the signals wirelessly. Such received signals are then demodulated by a demodulation circuit 34, decoded by a micro-controller unit (MCU) 36, and transmitted to an output device 38, e.g. a visual display unit or an alarm, which allows the user to monitor the heart beat rate as detected by the sensor 12.

In an ideal situation, the signals as transmitted by the transmitting units 10, 20 should be the same as those received by the receiving unit 30. However, due to power loss during transmission, the received signals are always weaker than the transmitted signals. The strength of the received signals will depend on various factors, including the relative orientation of the transmitting antenna and the receiving antenna, the power of transmission, and the distance between the transmitting unit and the receiving unit.

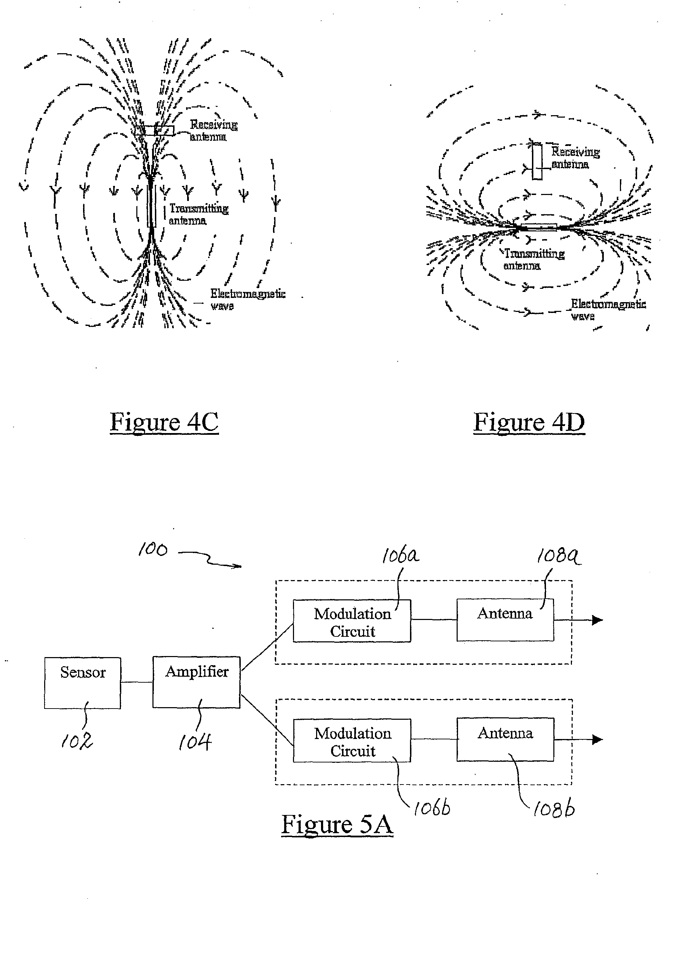

Given the same distance between the transmitting unit and the receiving unit and the same power of transmission, it is found that the received signals are stronger when the transmitting and receiving antennae are parallel to each other, as shown in Figures 4A and 4B, but are weaker when the transmitting and receiving antennae are perpendicular to each other, as shown in Figures 4C and 4D.

In order, therefore, to improve the quality of the received signals, and thus the performance of the device (be it a heart beat rate monitoring device, a speed monitoring device for a bicycle, or a pedaling rate monitoring device for a bicycle), a wireless signal transmitting unit according to the present invention is provided with two antennae which are non-parallel to each other. In particular, the two transmitting antennae are perpendicular to each other.

Figure 5A shows a block diagram of a circuit of a wireless signal transmitting unit 100 according to a first embodiment of the present invention, suitable for analog transmission of signals. The transmitting unit 100 includes a sensor 102 which picks up signals signifying heart beat of an individual (for a heart beat rate monitoring device), rotation of a wheel of a bicycle (for a speed monitoring device for a bicycle), or rotation of a pedal of a bicycle (for a pedaling rate monitoring device for a bicycle). The signals detected by the sensor 102 are then passed to an amplifier 104 for amplification. The same amplified signals are passed to two modulation circuits 106a, 106b which are connected with each other in parallel. The modulated signals are then passed to the respective antennae 108a, 108b for analog transmission wirelessly at radio frequency (RF). The two transmitting antennae 108a, 108b are perpendicular to each other, and can thus transmit the signals along two perpendicular axes.

As the receiving antenna can receive stronger signals which it is parallel to the transmitting antenna, i.e. the flux cutting is more frequent in such direction, when the receiving antenna is parallel to a first of the two transmitting antennae, it receives significant signals from this first transmitting antenna. On the other hand, when the receiving antenna is perpendicular to the first transmitting antenna, it receives relatively weak signals from this first transmitting antenna, but as the receiving antenna is now parallel to a second of the two transmitting antennae, it can receive strong enough signals from the second transmitting antenna for identifying the relevant information.

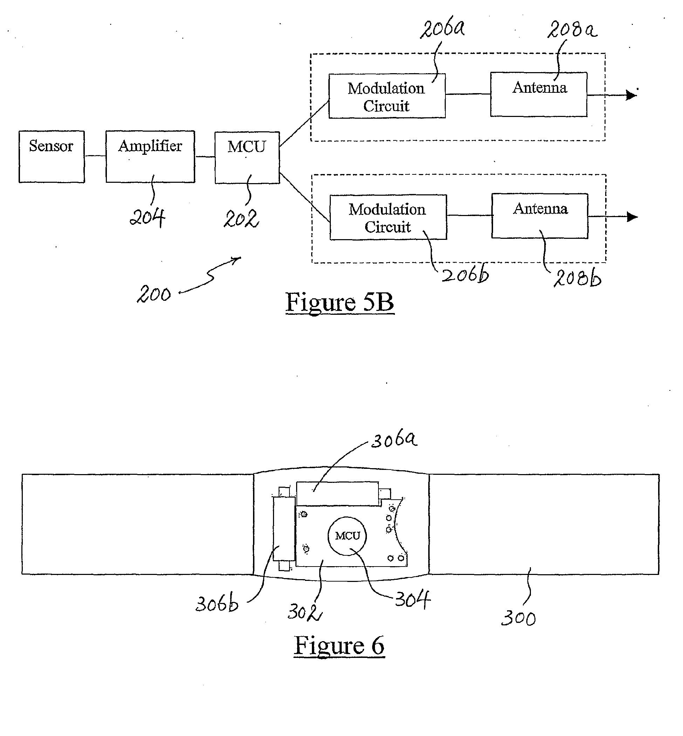

Figure 5B shows a block diagram of a circuit of a wireless signal transmitting unit, generally designated as 200, according to a second embodiment of the present invention, suitable for digital wireless transmission of signals at radio frequency (RF). The transmitting unit 200 is similar in construction to the wireless signal transmitting unit 100 discussed above, except with the introduction of a micro-controller unit (MCU) 202 between an amplifier 204 and two modulation circuits 206a, 206b which are connected with each other in parallel. The signals so modulated by the two modulation circuits 206a, 206b are then transmitted by a respective antenna 208a, 208b to the open space.

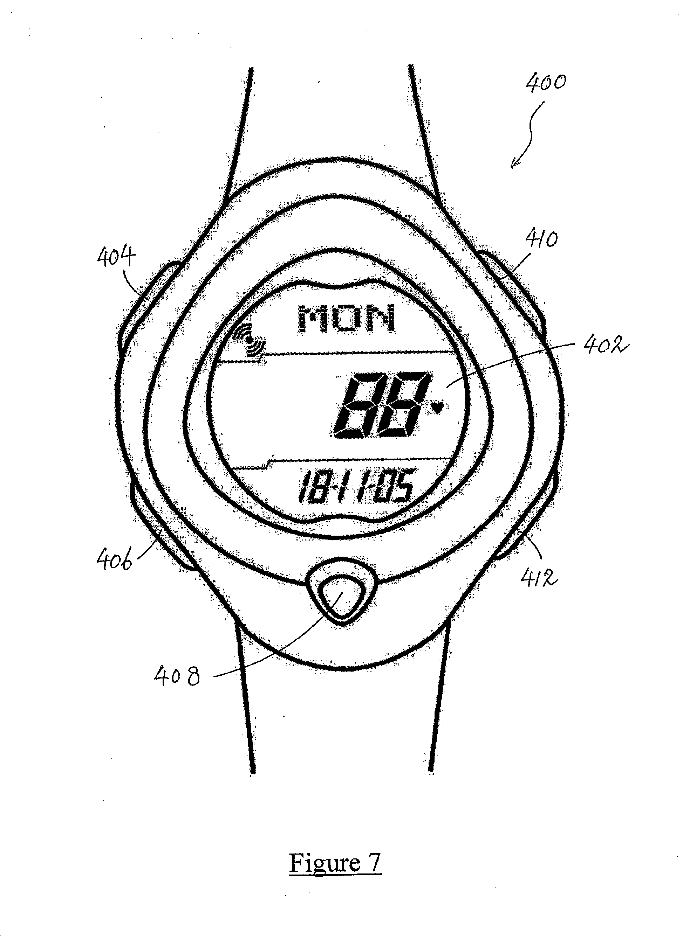

Figure 6 shows a schematic diagram of a chest belt 300 incorporating an RF wireless signal transmitting unit according to the present invention. As seen, the chest belt 300 includes a printed circuit board (PCB) 302 on which is mounted an MCU 304, an amplifier (not shown), two modulation circuits (not shown), and two antennae 306a, 306b which are perpendicular to each other. Sensors (not shown) are positioned in the chest belt 300 for picking up signals signifying heart beat of an individual, which are passed to the MCU 304 for subsequent transmission by the two antennae 306a, 306b.

An RF wireless signal receiving unit adapted to receive signals from the wireless signal transmitting unit 100, 200 is shown in Figure 7, and generally designated as 400. The receiving unit 400 is in the general form of a wrist watch, which can perform watch functions, over and above those of a receiving unit of a heart beat rate monitoring device. The receiving unit 400 has a visual display 402, e.g. a liquid crystal display (LCD) unit, for visually displaying various information, including time, date, heart beat rate, etc. Various buttons are provided on the receiving unit 400 for operating the receiving unit 400, for example:
- an Up Button 404;
- a Down Button 406;
- an OK/Accept Button 408;
- a Stop/Return Button 410; and
- a Signal/Light Button 412.

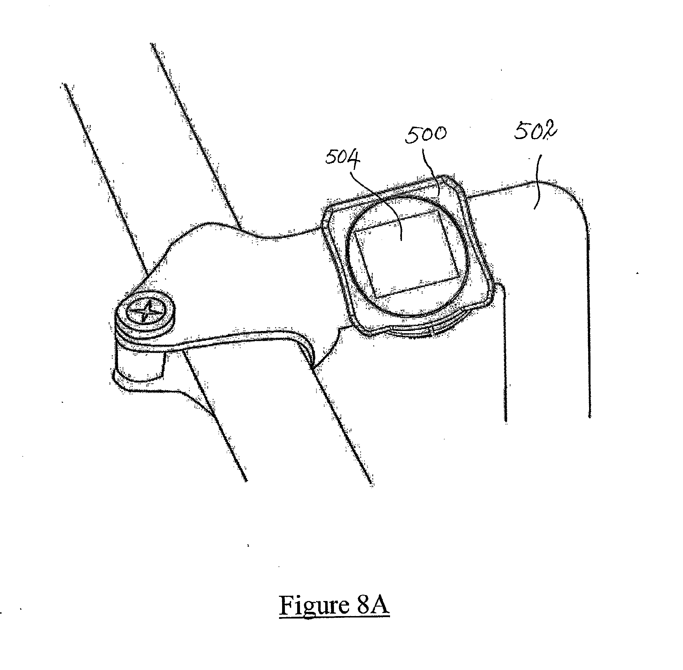

A wireless signal receiving unit 500 for a speed monitoring device for a bicycle is shown in Figure 8A as being secured onto a handle bar 502 of a bicycle. The receiving unit 500 has an LCD screen 504 for display of information relating to the speed of the bicycle.

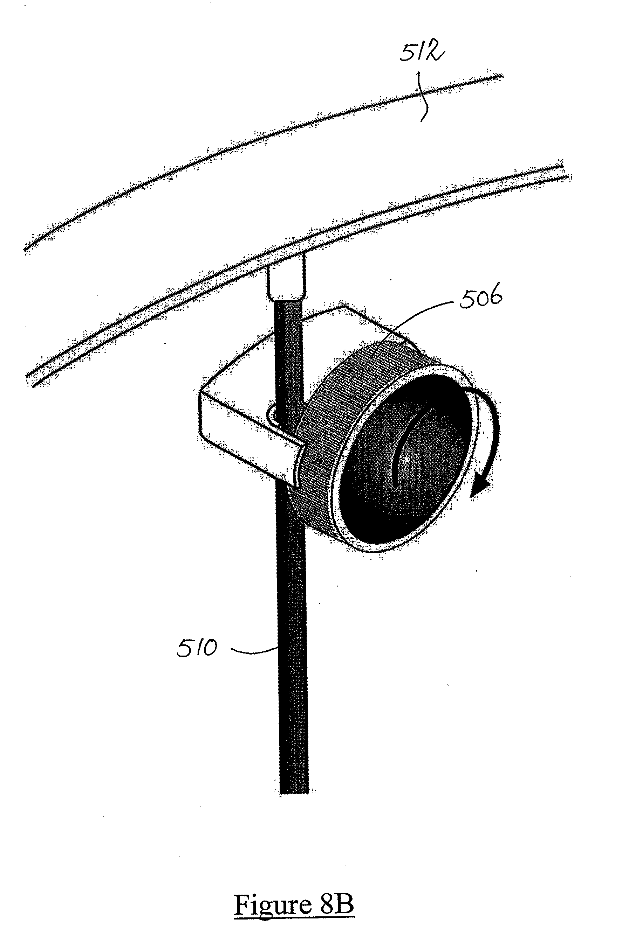

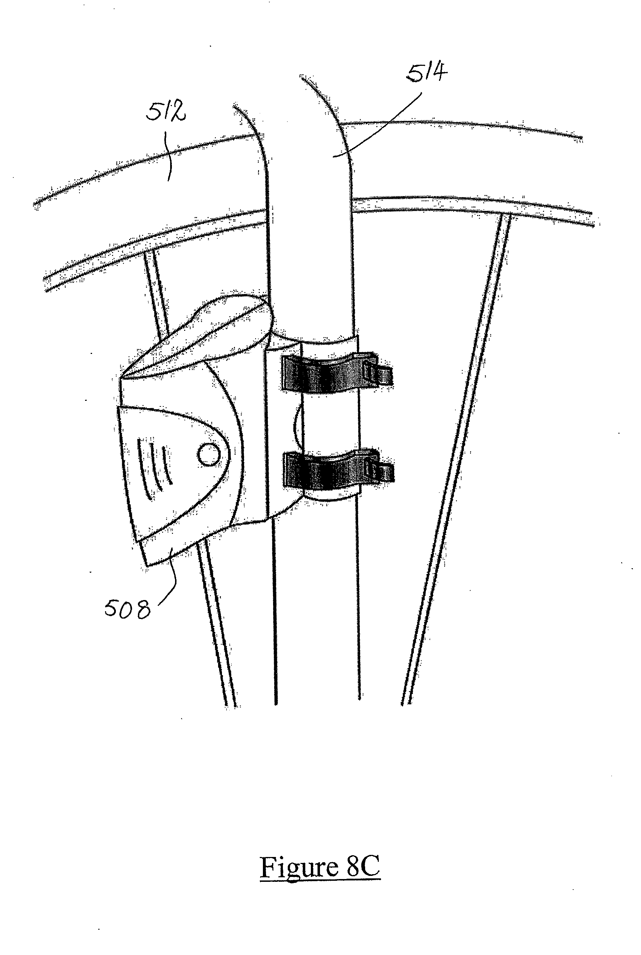

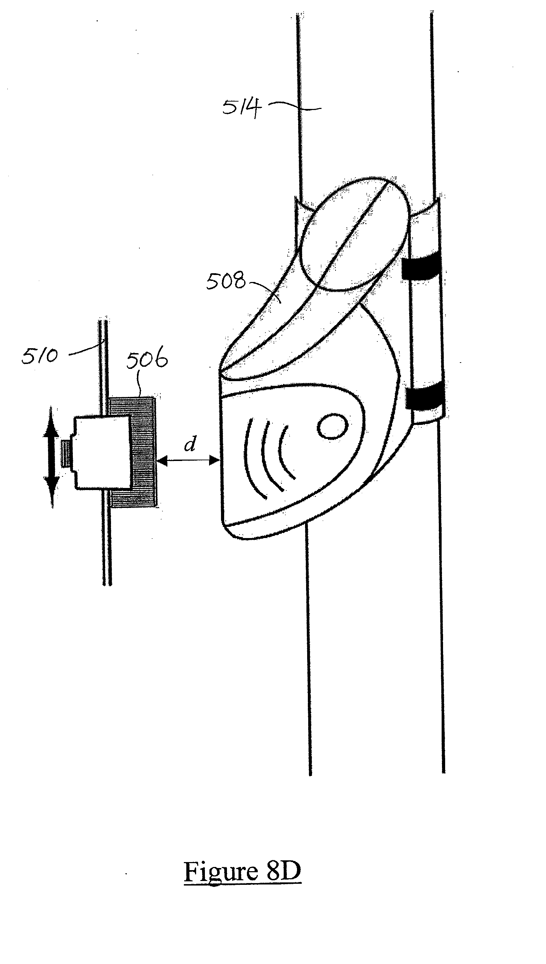

The wireless signal transmitting unit of the speed monitoring device includes, in addition to the above-mentioned transmitting circuit arrangement, a magnet 506 (see Figure 8B) and a reed switch 508 (see Figure 8C). The magnet 506 is fixed to a spoke 510 of a wheel 512 of the bicycle, and the reed switch 508 is secured to a front fork end 514 of the bicycle, such that the reed switch 508 of the transmitting unit is no more than 50 cm away from the receiving unit 500.

The reed switch 508 is in open circuit when it is not close to the magnet 506, but is in closed circuit when it is close to the magnet 506. The distance d between the reed switch 508 and the magnet 506 when they are closest to each other (as shown in Figure 8D) should not be more than 5 mm apart, so as to effect closing of the circuit of the reed switch 508 when they are closest to each other. The reed switch 508 will thus be in close circuit once every revolution of the magnet 506, and thus of the wheel 512, to thereby generate corresponding signals. The speed of the bicycle may thus be determined if the diameter of the wheel 512 of the bicycle is known.

The signals so detected by the wireless signal transmitting unit of the speed monitoring device are then transmitted to the receiving unit 500 on the handle bar 502 of the bicycle for display, so as to allow the cyclist to monitor the speed of the bicycle.

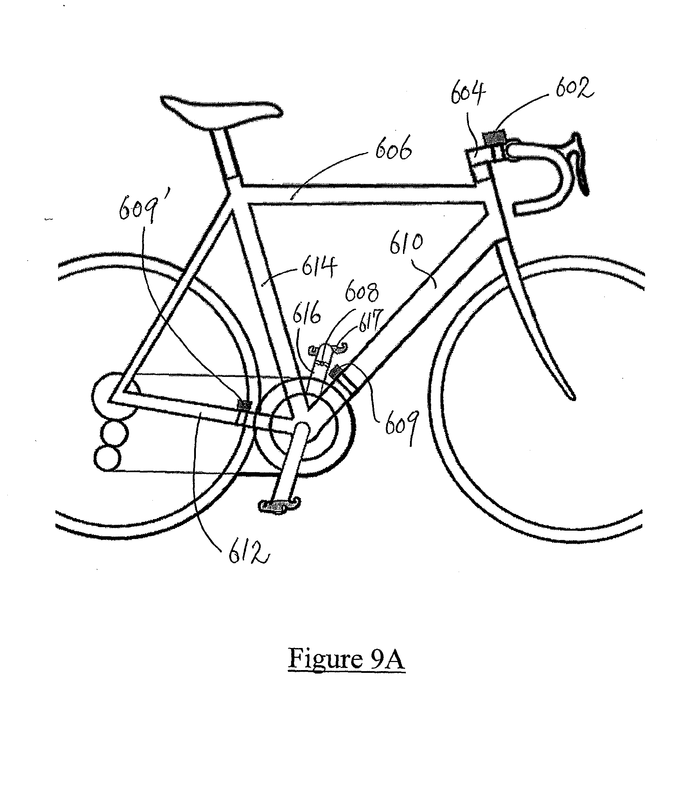

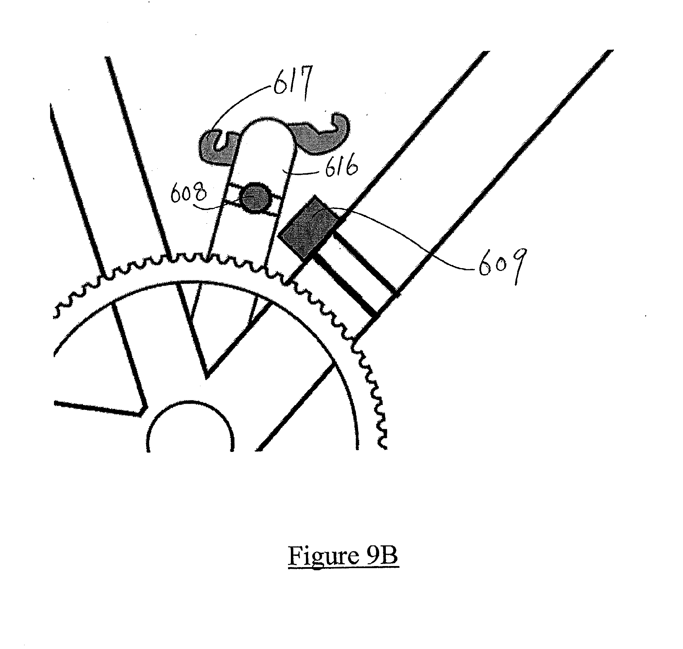

A wireless signal transmitting unit according to the present invention may be used as part of a pedaling rate monitoring device, as shown in Figures 9A and 9B. A wireless signal receiving unit 602 is, as in the case of the speed monitoring device discussed above, attached to a handlebar 604 of a bicycle 606. The wireless signal transmitting unit includes two parts, namely a movable part 608, and a stationary part 609 which may be fixed either to a down tube 610, a chain stay 612 (in which the stationary part is designated as 609'), or a seat tube 614 of the bicycle 606.

The movable part 608 is a magnet which is fixed to the inner side of a crank 616 of a pedal 617 of the bicycle 606. As to the stationary part 609 or 609', such includes a reed switch and a wireless signal transmitting circuit according to the present invention, as discussed above. Thus, similar to the operating principle discussed above relative to the speed monitoring device for a bicycle, the reed switch of the stationary part 609 is in open circuit when it is not close to the magnet of the movable part 608, but is in closed circuit when it is close to the magnet. The reed switch will thus be in close circuit once every revolution of the pedal, to thereby generate corresponding signals. The rate of rotation of the pedal of the bicycle 606, (i.e. the pedaling rate as measured in revolutions per minute) may thus be determined.

It should be understood that the above only illustrates examples whereby the present invention may be carried out, and that various modifications and/or alterations may be made thereto without departing from the spirit of the invention.

It should also be understood that certain features of the invention, which are, for clarity, described in the context of separate embodiments, may be provided in combination in a single embodiment. Conversely, various features of the invention which are, for brevity, described in the context of a single embodiment, may also be provided separately or in any appropriate sub-combinations.

## Claims

1. A wireless signal transmitter including:
at least one sensor adapted to detect signals signifying the occurrence of an event; and
at least two antennae adapted to wirelessly transmit said signals detected by said sensor;
wherein said at least two antennae are non-parallel to each other.

2. A transmitter according to Claim 1 wherein said at least two antennae are adapted to transmit wireless signals along at least two non-parallel axes.

3. A transmitter according to Claim 1 wherein said at least two antennae are substantially perpendicular to each other.

4. A transmitter according to Claim 1 wherein said sensor is connected with at least two modulation circuitry which are connected in parallel with each other.

5. A transmitter according to Claim 4 wherein each of said at least two modulation circuitry is associated with one of said at least two antennae.

6. A transmitter according to Claim 1 further including at least one amplifier adapted to amplify said signals detected by said sensor.

7. A method of transmitting signals wirelessly, including steps of:
(a) providing at least one sensor adapted to detect signals signifying the occurrence of an event;
(b) providing at least two antennae adapted to wirelessly transmit said signals detected by said sensor; and
(c) transmitting said signals wirelessly *via* said at least two antennae;
wherein said at least two antennae are non-parallel to each other.

8. A method according to Claim 7 wherein, in said step (c), said at least two antennae transmit wireless signals along at least two non-parallel axes.

9. A method according to Claim 7 wherein said at least two antennae are substantially perpendicular to each other.

10. A method according to Claim 7 further including a step (d) of transmitting said signals detected by said sensor to at least two modulation circuitry, which are connected in parallel with each other.

11. A method according to Claim 10 further including a step (e) of each of the at least two modulation circuitry transmitting modulated signals to a respective of said at least two antennae.

12. A method according to Claim 7 further including a step (f) of amplifying said signals detected by said sensor.

13. A heart beat rate monitoring device including:
at least one wireless signal transmitter according to Claim 1; and
at least one wireless signal receiver adapted to receive signals transmitted by said transmitter;
wherein said at least one transmitter is adapted to detect heart beat signals of an individual.

14. A speed monitoring device for a bicycle including:
at least one wireless signal transmitter according to Claim 1; and
at least one wireless signal receiver adapted to receive signals transmitted by said transmitter;
wherein said at least one transmitter includes at least one sensor adapted to detect signals signifying rotation of a wheel of a bicycle.

15. A device according to Claim 14 wherein at least part of said at least one transmitter is fixedly engaged with a fork end of said bicycle.

16. A device according to Claim 14 wherein a magnet of said at least one transmitter is fixedly engaged with a spoke of a wheel of said bicycle.

17. A pedaling rate monitoring device for a bicycle including:
at least one wireless signal transmitter according to Claim 1; and
at least one wireless signal receiver adapted to receive signals transmitted by said transmitter;
wherein said at least one transmitter includes at least one sensor adapted to detect signals signifying rotation of a pedal of a bicycle.

18. A device according to Claim 17 wherein at least part of said at least one transmitter is fixedly engaged with a down tube, a chain stay or a seat tube of said bicycle.

19. A device according to Claim 17 wherein a magnet of said at least one monitor is fixedly engaged with at least a crank of said pedal.
